# EUROPÄISCHE PATENTSCHRIFT

(11) **EP 1 593 852 B1**
(45) Veröffentlichungstag und Bekanntmachung des Hinweises auf die Patenterteilung: **16.11.2016**
(21) Anmeldenummer: 05008872.3
(22) Anmeldetag: 22.04.2005
(51) Int. Cl.: F04D 29/04, F04D 29/06

(54) **Umwälzpumpe und Verfahren zur Flüssigkeitsschmierung eines sphärischen Lagers in einem Elektromotor**
Centrifugal pump and lubrication method for its spherical bearing
Pompe centrifuge et procédé de lubrification de son palier sphérique

(30) Priorität: 07.05.2004 DE 102004023790
(43) Veröffentlichungstag der Anmeldung: 09.11.2005
(73) Patentinhaber: Xylem IP Holdings LLC, White Plains, NY 10604 (US)
(72) Erfinder: Laing, Oliver, 70435 Stuttgart (DE)
(74) Vertreter: Lenzing Gerber Stute

(56) Entgegenhaltungen:
- DE-A1- 19 629 843
- JP-A- 9 177 692
- US-A- 4 730 989

## Beschreibung

Die Erfindung betrifft eine Umwälzpumpe mit einem Elektromotor, welcher einen Rotor und einen Stator umfaßt, wobei der Rotor an einem sphärischen Lager gelagert ist, welches einen Gleitkörper mit konvexer sphärischer Oberfläche und eine Lagerpfanne mit konkaver sphärischer Oberfläche umfaßt und welches flüssigkeitsgeschmiert ist, und wobei ein Spalt zwischen dem Rotor und Stator gebildet ist.

Die Erfindung betrifft ferner ein Verfahren zur Flüssigkeitsschmierung eines sphärischen Lagers mit einem Gleitkörper und einer Lagerpfanne in einem Elektromotor.

Aus der DE 196 29 843 A1 ist eine Kreiselpumpe bekannt, welche eine saugseitig angeordnete Spritzdüse aufweist, die einen Strahl auf eine Lagerschale eines Schaufelrades richtet, damit die Lagerschmierung auch bei gelegentlichem Luftblaseneinschluss aufrechterhalten bleibt.

Sphärische Lager haben den Vorteil, daß sie insbesondere im Zusammenhang mit Flüssigkeitsschmierung selbst nachstellend sind, so daß Verschleiß nicht zu erhöhtem Lagerspiel führt.

Der Erfindung liegt die Aufgabe zugrunde, eine Umwälzpumpe der eingangs genannten Art mit optimierter Lagerschmierung bereitzustellen.

Diese Aufgabe wird bei der Umwälzpumpe der eingangs genannten Art erfindungsgemäß dadurch gelöst, daß eine Strömungsführung zur Durchführung von Schmierungsflüssigkeit durch einen Schmierungsbereich zwischen dem Gleitkörper und der Lagerpfanne getrennt von dem Spalt ist, daß sich an den Schmierungsbereich von der Lagerpfanne weg ein Raum anschließt, wobei der Schmierungsbereich durch eine Dichtung gegenüber dem Raum abgedichtet ist und daß die Dichtung an dem Gleitkörper anliegt.

Der Spalt zwischen Stator und Rotor wird auch als Luftspalt bezeichnet, da über ihn Stator und Rotor elektromagnetisch aneinander koppeln. Diese elektromagnetische Kopplung treibt die Drehbewegung des Rotors an. Es ist aus dem Stand der Technik bekannt, Schmierungsflüssigkeit durch diesen Luftspalt zu führen. (Die Bezeichnung Luftspalt wird dabei beibehalten, obwohl Schmierungsflüssigkeit und insbesondere Wasser sich in diesem Spalt befindet.)

Erfindungsgemäß ist es vorgesehen, daß die Strömungsführung für die Schmierungsflüssigkeit diesen Spalt vermeidet. Dadurch wird die Lagerschmierung unabhängig von der Luftspaltströmung.

Als Schmierungsflüssigkeit wird ein Teil derjenigen Flüssigkeit verwendet, die durch die Umwälzpumpe befördert wird. Diese Flüssigkeit kann Verunreinigungen enthalten. Die Verunreinigungen sind an sich unproblematisch. Da aber zwischen dem Stator und Rotor hohe magnetische Kräfte wirken können, können sich dort magnetische Partikel wie magnetische Eisenteilchen absetzen. Eine Ansammlung von solchen Partikeln kann zu einer Blockade der Umwälzpumpe führen. Durch die erfindungsgemäße Lösung wird die Durchführung von Flüssigkeit durch diesen kritischen Spaltbereich vermieden oder zumindest stark reduziert. Dadurch ist das Problem der Ansammlung magnetischer Partikel vermieden. Erfindungsgemäß wird eine Strömungsführung gewählt, die eben den Spalt vermeidet. Es müssen dann auch keine Filter für (magnetische) Partikel vorgesehen werden.

Aufgrund einer radialen Erstreckung des Luftspalts liegt eine "inhärente" Friktionspumpe (Reibungspumpe) vor, welche eine gewisser Förderhöhe hat. Die Friktionspumpe ist dabei im wesentlichen unabhängig vom Betriebspunkt. Dagegen ist die Förderhöhe eines über den Rotor angetriebenen Laufrads abhängig vom Betriebspunkt. Bei zunehmender Förderhöhe wird die Friktionspumpe im Vergleich zum Laufrad stärker, wobei die Friktionspumpe gegen den Laufraddruck arbeitet. Es gibt einen Punkt, bei dem die Friktionspumpe dieselbe Förderhöhe hat wie das Laufrad. Es kann dann keine ausreichende Lagerschmierung mehr garantiert werden, d. h. es treten unkontrollierbare Verhältnisse auf. Bei der erfindungsgemäßen Lösung ist dagegen der Transport von Schmierungsflüssigkeit zur Schmierung des Lagers durch den (Luft-)Spalt vermieden oder zumindest stark reduziert, so daß die Lagerschmierung entkoppelt von der Förderhöhe und dem Betriebspunkt ist. Solche beschriebenen unkontrollierbaren Verhältnisse bezüglich der Lagerschmierung können also nicht auftreten.

Eine Strömungsführung unter Umgehung des Spalts zwischen Stator und Rotor läßt sich auf einfache Weise realisieren.

Es schließt sich an den Schmierungsbereich von der Lagerpfanne weg ein Raum an, wobei der Schmierungsbereich gegenüber dem Raum abgedichtet ist. Die Abdichtung muß nicht unbedingt perfekt sein, d. h. es kann zugelassen sein, daß Schmierungsflüssigkeit in den Raum eintritt. Dadurch kann sich dieser Raum, der insbesondere in Verbindung mit dem Spalt zwischen Stator und Rotor steht, allmählich mit Flüssigkeit füllen bzw. es kann Flüssigkeit aus diesem Raum in den Schmierungsbereich gelangen. Der Volumendurchfluß ist aber vernachlässigbar gering bezogen auf den Volumendurchfluß durch die erfindungsgemäße Strömungsführung, welche den Spalt zwischen Stator und Rotor umgeht. Der Flüssigkeitsanteil, welcher den Luftspalt durchströmt, ist deshalb vernachlässigbar gegenüber dem Flüssigkeitsanteil, welcher den Schmierungsbereich aufgrund der erfindungsgemäßen Strömungsführung durchströmt. Damit ist das Problem der Ansammlung von magnetischen Partikeln in dem Luftspalt weitgehend vermieden.

Es ist eine Dichtung zur Abdichtung des Schmierungsbereichs zu dem Raum vorgesehen. Der Volumendurchsatz an Flüssigkeit und insbesondere Schmierungsflüssigkeit durch den Spalt zwischen Stator und Rotor läßt sich dadurch minimieren.

Die Dichtung liegt an dem Gleitkörper an. Dies sorgt für eine entsprechende Dichtwirkung und der Volumendurchsatz an Schmierungsflüssigkeit durch die Dichtung hindurch läßt sich minimieren.

Günstigerweise umgeht die Strömungsführung den Spalt zwischen Stator und Rotor. Sie ist vorzugsweise an dem Spalt zwischen Stator und Rotor vorbeigeführt.

Vorteilhafterweise ist die Strömungsführung so ausgebildet, daß Schmierungsflüssigkeit dem Schmierungsbereich über den Rotor zuführbar ist und über den Rotor abführbar ist. Es läßt sich dann Schmierungsflüssigkeit direkt in den Schmierungsbereich einkoppeln und aus diesem auskoppeln, ohne daß der Luftspalt zwischen Stator und Rotor durchströmt werden muß.

Insbesondere ist die Strömungsführung an dem Rotor ausgebildet, um so auf einfache Weise den Luftspalt umgehen zu können.

Es ist vorgesehen, daß die Strömungsführung einen oder mehrere Strömungskanäle umfaßt, welche in dem Rotor angeordnet sind. Dadurch kann dem Schmierungsbereich direkt Schmierungsflüssigkeit zugeführt werden, ohne daß eine Durchführung durch den Spalt zwischen Stator und Rotor notwendig ist.

Ganz besonders vorteilhaft ist es, wenn die Strömungsführung einen oder mehrere Zuführungskanäle für Schmierungsflüssigkeit in den Schmierungsbereich umfaßt, welche in dem Rotor gebildet sind. Der Schmierungsbereich ist zwischen dem insbesondere als Rotorschale ausgebildeten Rotor und dem Gleitkörper gebildet. Durch Zuführungskanäle in dem Rotor läßt sich Schmierungsflüssigkeit direkt in den Schmierungsbereich einkoppeln.

Günstigerweise ist der Schmierungsbereich endseitig zwischen dem Gleitkörper und der Lagerpfanne geschlossen, d. h. zu dem Ende eines Bereichs zwischen

Gleitkörper und Lagerpfanne hin, an dem Schmierungsflüssigkeit austreten könnte, ist ein entsprechender Abschluß vorgesehen, der das Austreten von Schmierungsflüssigkeit weitgehend verhindert. Dadurch wiederum ist es möglich, eine Strömungsführung aufzubauen, welche den Spalt zwischen Stator und Rotor umgeht.

Insbesondere ist der Schmierungsbereich zu einem Halter für den Gleitkörper hin geschlossen. Der Halter für den Gleitkörper (und der Gleitkörper) sitzt drehfest bezüglich des Stators. Er kann deshalb in fluidwirksamer Verbindung mit dem Spalt zwischen Stator und Rotor stehen. Durch den Abschluß ist erreicht, daß der Luftspalt zumindest weitgehend strömungsfrei ist.

Der Gleitkörper sitzt teilweise in dem Raum. Über diesen Raum ist eine Drehbarkeit des Rotors gegenüber dem Stator ermöglicht.

Insbesondere ist in dem Raum zumindest teilweise ein Halter für den Gleitkörper angeordnet. Dadurch ist sichergestellt, daß der Rotor, welcher in dem sphärischen Lager gelagert ist, relativ zu dem Stator frei rotieren kann.

Insbesondere steht der Raum in fluidwirksamer Verbindung mit dem Spalt zwischen Stator und Rotor. Wenn die Abdichtung des Schmierungsbereichs gegenüber dem Raum nicht perfekt ist, dann kann Schmierungsflüssigkeit in den Spalt eindringen und sich dort allmählich ansammeln. Das in den Raum eindringende Wasser muß dann nicht abgeführt werden. Gleichzeitig läßt sich aber sicherstellen, daß der Volumendurchsatz von Flüssigkeit durch den Spalt zwischen Stator und Rotor minimal ist.

Insbesondere weist die Dichtung dem Gleitkörper zugewandt einen umlaufenden Rand auf. Über diesen umlaufenden Rand läßt sich eine Abdichtung zu dem Gleitkörper erreichen.

Bei einer Ausführungsform ist die Dichtung integral mit der Lagerpfanne gebildet. Die Lagerpfanne ist dann so ausgebildet, daß sie in einem Dichtungsbereich an dem Gleitkörper anliegt mit einem umlaufenden Rand, so daß der Durchtritt von Schmierungsflüssigkeit zwischen der Lagerpfanne und dem Gleitkörper minimiert ist.

Es kann alternativ oder zusätzlich mindestens ein Dichtelement zur Abdichtung des Schmierungsraums vorgesehen sein, wobei es sich bei dem Dichtelement um ein von der Lagerpfanne getrenntes Dichtelement handelt. Beispielsweise kann ein Teflonring verwendet werden.

Grundsätzlich ist es möglich, daß das Dichtungselement mit dem Rotor außerhalb der Lagerpfanne verbunden ist. Günstig ist es, wenn das Dichtelement an der Lagerpfanne sitzt. Es läßt sich dort auf einfache Weise fixieren. Grundsätzlich wäre es auch möglich, das Dichtelement drehfest an dem Gleitkörper zu fixieren. Der Rotor dreht sich dann gegenüber dem Dichtelement. Vorteilhaft ist es jedoch, wenn das Dichtelement an dem Rotor fixiert ist und sich mit diesem gegenüber dem Gleitkörper dreht.

Beispielsweise ist das Dichtelement in Form eines Dichtrings (O-Rings) ausgebildet.

Es kann vorgesehen sein, daß die Dichtung diesseits einer Äquatorialebene des Gleitkörpers angeordnet ist, d. h. die Lagerpfanne nicht über die Äquatorial-ebene hinausreicht und auch die Dichtung nicht darüber hinausreicht. Dies hat den Vorteil, daß die Dichtung sich selber nachstellen kann, wenn sich der Gleitkörper weiter in die Lagerpfanne "eingräbt". (Sphärische Lager haben den Vorteil, daß bei entsprechender Ausbildung der Verschleiß ebenfalls sphärisch ist, d. h. daß die sphärische Beziehung zwischen Gleitkörper und Lagerpfanne auch trotz Verschleiß erhalten bleibt. Dies bedeutet für das Gesamtsystem Lagerpfanne-Gleitkörper eine im Gesamtresultat optimale Abdichtung und optimale Lagerschmierung.)

Es ist auch möglich, daß die Dichtung jenseits einer Äquatorialebene des Gleit-körpers angeordnet ist. Diese Anordnung wird beispielsweise vorgenommen, wenn ein getrenntes Dichtelement vorgesehen ist.

Günstig ist es, wenn ein oder mehrere Strömungskanäle in den Schmierungsbereich münden. Über diese läßt sich dann Schmierungsflüssigkeit zuführen/abführen.

Mindestens ein Strömungskanal kann seitlich in den Schmierungsbereich weisen. Es läßt sich dann Schmierungsflüssigkeit einkoppeln, wobei der Schmierungsbereich gegenüber einem Freiraum (welcher in Verbindung mit dem Spalt zwischen Stator und Rotor steht) abschließbar ist. Insbesondere ist eine Mündungsöffnung des mindestens einen Strömungskanals, mit welcher dieser in den Schmierungsbereich mündet, quer zu einer Drehachse des Rotors ausgerichtet. Es läßt sich dann eine Durchströmung des Schmierungsbereichs und damit eine optimierte Flüssigkeitsschmierung erreichen.

Es ist ferner günstig, wenn der mindestens eine Strömungskanal in der Lagerpfanne und/oder an der Lagerpfanne angeordnet ist. Es läßt sich dann Schmierungsflüssigkeit durch den Rotor und insbesondere durch die Lagerpfanne hindurch in den Schmierungsbereich einkoppeln. Wenn ein getrenntes Dichtelement vorgesehen ist, dann genügt es grundsätzlich, wenn der mindestens eine Strömungskanal über eine entsprechende Oberflächenausbildung der Lagerpfanne an einer dem Dichtelement zugewandten Oberfläche hergestellt ist.

Ganz besonders vorteilhaft ist es, wenn eine Mündungsöffnung des mindestens einen Strömungskanals, über die Schmierungsflüssigkeit in den Strömungskanal einströmen kann, mit einem Druckbereich der Umwälzpumpe in fluidwirksamer Verbindung steht. Es ist dann dafür gesorgt, daß Schmierungsflüssigkeit (als Teil der durch die Umwälzpumpe beförderten Flüssigkeit) durch den Strömungskanal und damit durch den Schmierungsbereich hindurch transportiert wird.

Es ist ferner günstig, wenn in der Lagerpfanne eine Schmierungsöffnung gebildet ist. Insbesondere ist die Schmierungsöffnung zu einer Drehachse des Rotors ausgerichtet. Sie ist über einen zentralen materialfreien Bereich hergestellt. Wenn dieser zentrale materialfreie Bereich entsprechende Abmessungen aufweist, dann läßt sich dadurch auch sicherstellen, daß der Lagerverschleiß sphärisch ist.

Es ist besonders vorteilhaft, wenn die Schmierungsöffnung mit einem Saugbereich der Umwälzpumpe in fluidwirksamer Verbindung steht. Dadurch läßt sich ein automatischer Durchtransport von Schmierungsflüssigkeit durch die Strömungsführung erreichen, um so für einen Durchtransport von Schmierungsflüssigkeit durch den Schmierungsbereich zu sorgen.

Es ist ferner vorteilhaft, wenn eine Abdeckung für den Spalt zwischen Stator und Rotor vorgesehen ist. Dadurch läßt sich der Volumendurchfluß von Flüssigkeit durch den Spalt zwischen Stator und Rotor minimieren. Bei entsprechender Anordnung der Abdeckung läßt sich auch eine direkte Flüssigkeitsvorbeiführung an magnetischen Bereichen des Rotors außerhalb des Luftspalts vermeiden.

Der Volumendurchfluß durch den Spalt zwischen Stator und Rotor läßt sich gering halten, wenn eine Abdeckung zwischen einem Laufrad und dem Elektromotor vorgesehen ist. Die Abdeckung verhindert den Flüssigkeitsdurchfluß durch den Spalt oder reduziert zumindest den Volumenanteil an Flüssigkeit, der durch den Spalt strömen kann. Eine solche Abdeckung läßt sich auf einfache Weise beispielsweise in der Form eines Trennblechs ausbilden. Das Trennblech überdeckt den Spalt an seinem dem Druckbereich zugewandten Ende zu einem Laufradraum hin. Die Abdeckung läßt sich so ausbilden, daß die Beweglichkeit des Rotors gegenüber dem Stator nicht behindert ist.

Insbesondere ist zwischen der Abdeckung und dem Elektromotor ein Trennraum gebildet. Dadurch läßt sich auf einfache Weise der Flüssigkeitsdurchfluß durch den (Luft-)Spalt gering halten bei Gewährleistung der Rotierbarkeit des Rotors.

Günstigerweise steht die Strömungsführung mit einem Druckbereich der Umwälzpumpe in fluidwirksamer Verbindung und mit einem Saugbereich in fluidwirksamer Verbindung, wobei Schmierungsflüssigkeit über mindestens einen Strömungskanal durch den Schmierungsbereich strömen kann. Durch die Verbindung mit dem Druckbereich und dem Saugbereich wird unabhängig von den Betriebsparametern des Elektromotors für eine Flüssigkeitsschmierung des sphärischen Lagers gesorgt.

Bei der erfindungsgemäßen Umwälzpumpe ist vorzugsweise ein Lagerbereich des sphärischen Lagers zwischen dem Elektromotor und einem Laufrad angeordnet. Diese Anordnung bezieht sich dabei auf die Richtung der Drehachse. Der Lagerbereich ist derjenige sphärische Bereich, in welchem die Lagerpfanne auf dem Gleitkörper gleitet.

Bei einem Ausführungsbeispiel kann eine Öffnung zwischen einem Raum, in welchem ein Halter für den Gleitkörper mindestens teilweise angeordnet ist, und einem Trennraum vorgesehen sein, wobei der Trennraum unterhalb eines Laufradraums liegt. Der Trennraum ist gegenüber dem Laufradraum beispielsweise durch eine Abdeckung begrenzt. Durch diese Öffnung kann bei einer Reibungspumpe Flüssigkeit in diesen Raum eindringen, um die Kühlung von Stator und/oder Rotor zu verbessern. In Zusammenwirkung mit einer Abdeckung läßt sich dann eine Art von geschlossenem Kreislauf durch den Raum, den Luftspalt und einen Raum zwischen einer Abdeckung und dem Rotor ausbilden.

Der Erfindung liegt ferner die Aufgabe zugrunde, ein Verfahren zur Flüssigkeitsschmierung eines sphärischen Lagers mit einem Gleitkörper und einer Lagerpfanne in einem Elektromotor bereitzustellen, welches bei allen Betriebsparametern des Elektromotors bzw. allen Systemdrücken funktioniert.

Diese Aufgabe wird bei dem genannten Verfahren erfindungsgemäß dadurch gelöst, daß ein Strömungsweg für Schmierungsflüssigkeit in einen Schmierungsbereich zwischen Gleitkörper und Lagerpfanne freigegeben ist oder wird und ein Strömungsweg für Schmierungsflüssigkeit durch einen Luftspalt des Elektromotors durch eine Dichtung, welche an dem Gleitkörper anliegt, gesperrt ist oder wird.

Das erfindungsgemäße Verfahren weist die bereits im Zusammenhang mit der erfindungsgemäßen Umwälzpumpe erläuterten Vorteile auf.

Weitere vorteilhafte Ausgestaltungen wurden bereits im Zusammenhang mit der erfindungsgemäßen Umwälzpumpe erläutert.

Insbesondere ist oder wird ein Strömungsweg durch einen Rotor des Elektromotors freigegeben und ein Strömungsweg zwischen dem Rotor und einem Stator gesperrt. Dadurch läßt sich eine Lagerschmierung unter Umgehung des Luftspalts erreichen.

Die nachfolgende Beschreibung bevorzugter Ausführungsbeispiele dient im Zusammenhang mit der Zeichnung der näheren Erläuterung der Erfindung. Es zeigen:
- Figur 1: eine seitliche Schnittansicht eines Ausführungsbeispiels einer erfindungsgemäßen Umwälzpumpe;
- Figur 2: eine Ansicht längs der Linie 2-2 gemäß Figur 1;
- Figur 3: eine Seitenansicht in der Richtung 3 gemäß Figur 2;
- Figur 4: eine vergrößerte Darstellung eines Rotors eines Elektromotors der Umwälzpumpe gemäß Figur 1;
- Figur 5: ein erstes Ausführungsbeispiel einer Strömungsführung zur Flüssigkeitsschmierung bei dem Rotor gemäß Figur 4 und
- Figur 6: ein zweites Ausführungsbeispiel einer Strömungsführung zur Flüssigkeitsschmierung.

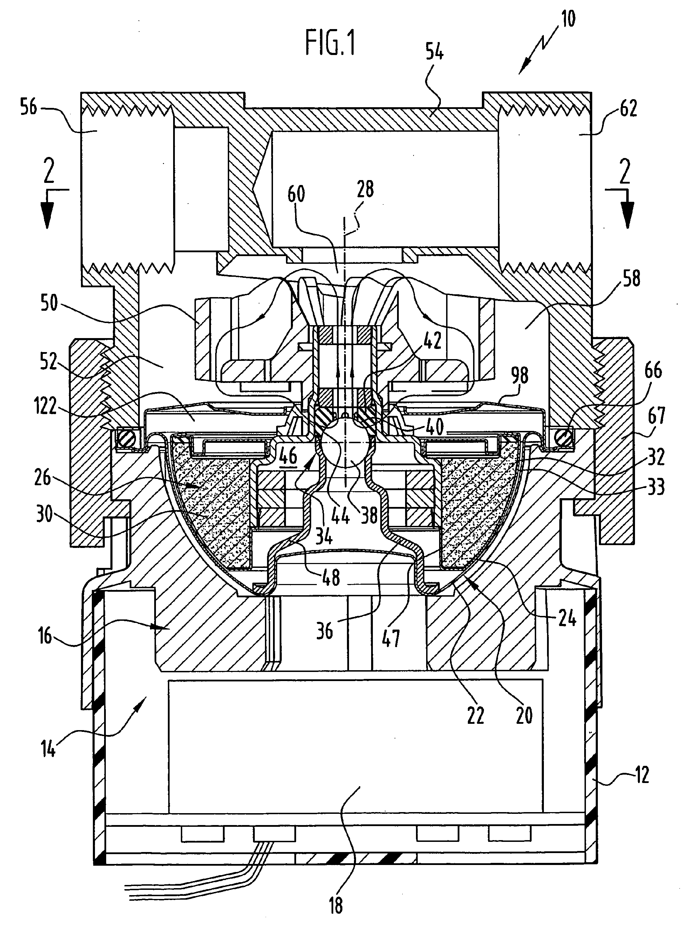

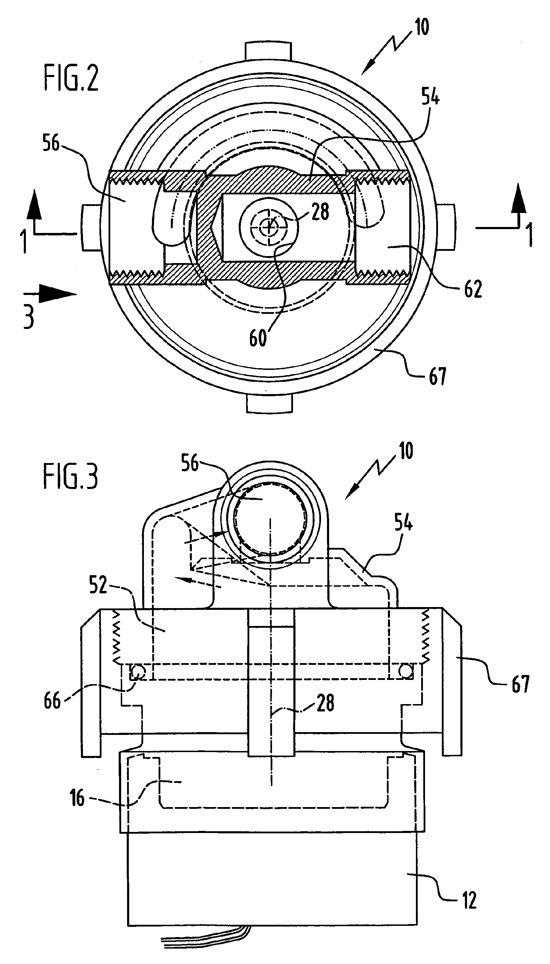

Ein Ausführungsbeispiel einer erfindungsgemäßen Umwälzpumpe, welche in den Figuren 1 bis 3 gezeigt und dort als Ganzes mit 10 bezeichnet ist, umfaßt ein erstes Gehäuse 12 (Motorgehäuse), in welchem ein als Ganzes mit 14 bezeichneter Elektromotor angeordnet ist.

Dieser Elektromotor 14 weist einen Stator 16 auf, welcher eine Mehrzahl von Spulen (in der Zeichnung nicht gezeigt) umfaßt. Über eine Ansteuerungsschaltung 18 lassen sich diese Spulen ansteuern. Beispielsweise werden sie elektronisch kommutiert. Der Stator 16 ist gegenüber Flüssigkeitseinwirkung durch eine Trennkalotte 20 geschützt. Diese Trennkalotte 20 umgibt den Stator 16 und dichtet ihn in dem Gehäuse 12 ab.

Die Trennkalotte 20 weist einen Bereich 22 mit sphärisch konkaver Oberfläche auf. Durch diesen Bereich 22 wiederum ist ein Kugelabschnittsbereich 24 definiert, in welchem ein Rotor 26 um eine Drehachse 28 rotierbar angeordnet ist. Die Drehachse 28 geht dabei durch einen Kugelmittelpunkt der (gedachten) Kugel, welche den Kugelabschnittsbereich 24 definiert.

Der Rotor 26 weist beispielsweise eine Mehrzahl von Permanentmagneten 30 auf. Er ist dem Bereich 22 der Trennkalotte 20 dem Stator 16 zugewandt sphärisch konvex ausgebildet. Die Permanentmagnete 30 sind über eine Ummantelung 32 gegenüber Flüssigkeitseinwirkung geschützt. Der Trennkalotte 20 zugewandt ist die Ummantelung 32 sphärisch konvex ausgebildet. Zwischen dem Rotor 26 und dem Stator 16 ist ein Luftspalt 33 gebildet, welcher durch die Ummantelung 32 und die Trennkalotte 20 begrenzt ist. Dieser Luftspalt 33 hat im Bereich der sphärischen Oberflächen der Trennkalotte 20 und der Ummantelung 32 eine kugelschalenförmige Ausbildung.

Zur Lagerung des Rotors 26 in dem Gehäuse 12 ist ein sphärisches Lager 34 vorgesehen. Dieses sphärische Lager 34 umfaßt einen als Lagersäule ausgebildeten Halter 36, welcher ortsfest bezüglich des Gehäuses 12 sitzt.

Beispielsweise ist der Halter 36 als Metallsäule ausgebildet, wobei die entsprechenden Metallteile mit der Trennkalotte 20 verbunden sind. Der Halter 36 kann auch integral mit der Trennkalotte 20 gebildet sein.

Es ist grundsätzlich auch möglich, daß der Halter 36 aus einem Kunststoffmaterial hergestellt ist.

Der Halter 36 hält einen Gleitkörper 38, welcher insbesondere als Kugel ausgebildet ist. Dieser Gleitkörper 38 ist aus einem Hartmaterial wie beispielsweise einem Keramikmaterial hergestellt. Er weist eine sphärisch konvexe Oberfläche 40 auf, auf welcher eine Lagerpfanne 42 des Rotors 26 gleitet. Die Lagerpfanne 42 des Rotors 26 weist dazu eine sphärisch konkave Oberfläche 44 auf, welche an die sphärisch konvexe Oberfläche 40 des Gleitkörpers 38 angepaßt ist. Es ist dann ein sphärischer Lagerbereich gebildet.

Die Lagerpfanne 42 ist beispielsweise aus Kohle hergestellt.

Die Drehachse 28 des Rotors 26 geht durch den Kugelmittelpunkt des Gleitkörpers 38.

An dem Rotor 26 ist ein Freiraum 46 gebildet, so daß der Rotor 26 schalenförmig ausgebildet ist ("Rotorschale") und auf den Gleitkörper 38, welcher wiederum auf dem Halter 36 sitzt, aufsetzbar ist. Bei in dem sphärischen Lager 34 gelagerten Rotor 26 liegt der Halter 36 zumindest teilweise in diesem Freiraum 46. Der Gleitkörper 38 liegt dann ebenfalls teilweise in diesem Freiraum 46.

Die Permanentmagnete 30 sind durch Trennwände 47 abgedichtet.

Die Wände 48, welche den Halter 36 bilden, sind insbesondere mit der Ummantelung 32 verbunden und können integral mit dieser gebildet sein.

An dem Rotor 26 sitzt drehfest ein Laufrad 50. Bei Rotation des Rotors 26 um die Drehachse 28 dreht sich dieses Laufrad 50 ebenfalls um die Drehachse 28, wobei durch diese Rotation des Laufrads 50 eine Flüssigkeitsumwälzung bewirkbar ist.

Der sphärische Lagerbereich des sphärischen Lagers 34 sitzt bezogen auf die Drehachse 28 zwischen dem Laufrad 50 und dem Elektromotor 14.

Das Laufrad 50 ist in einem Laufradraum 52 eines zweiten Gehäuses 54 (Pumpengehäuse) angeordnet. Das zweite Gehäuse 54 sitzt auf dem ersten Gehäuse 12. Über das zweite Gehäuse 54 läßt sich dem Laufradraum 52 Flüssigkeit zuführen und aus diesem Flüssigkeit abführen.

Das zweite Gehäuse 54 weist einen ersten Anschluß 56 auf, über den Flüssigkeit von dem Laufradraum 52 abführbar ist. Dieser erste Anschluß 56 steht dabei in fluidwirksamer Verbindung mit einem Druckbereich 58 des zweiten Gehäuses 54. In dem Druckbereich 58 anstehende Flüssigkeit steht unter Überdruck gegenüber einem Saugbereich 60.

Das Gehäuse 54 weist ferner einen zweiten Anschluß 62 auf, über den Flüssigkeit zuführbar ist. Der zweite Anschluß 62 steht in fluidwirksamer Verbindung mit dem Saugbereich 60 der Umwälzpumpe 10. Der Saugbereich 60 und der Druckbereich 58 sind durch die Anordnung und Ausbildung des Laufrads 50 in dem Laufradraum 52 definiert. Bei dem gezeigten Ausführungsbeispiel umgibt der Druckbereich 58 ringförmig die Seiten des Laufrads 50. Der Saugbereich 60 liegt oberhalb des Laufrads 50.

Das zweite Gehäuse 54 ist auf dem ersten Gehäuse 12 aufgesetzt. Zur Flüssigkeitsabdichtung ist eine Dichtung 66 beispielsweise in der Form eines O-Rings vorgesehen. Über einen Flanschring 67 lassen sich die beiden Gehäuse 12 und 54 miteinander verbinden.

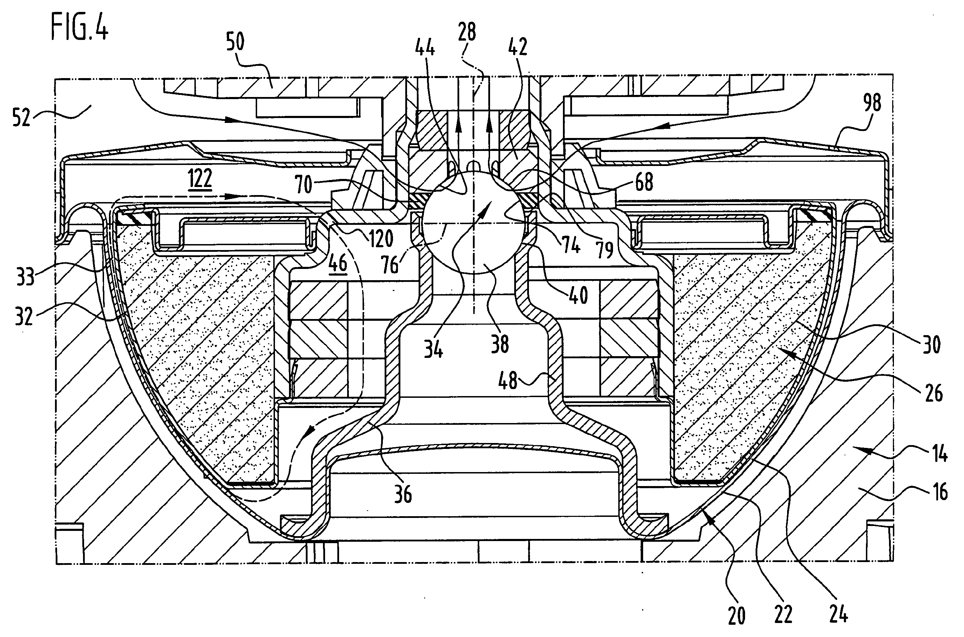

Das sphärische Lager 34 ist flüssigkeitsgeschmiert mit der umzuwälzenden Flüssigkeit (Förderflüssigkeit). Dazu wird Schmierungsflüssigkeit in einen Schmierungsbereich 68 (Figur 4) in den Bereich zwischen dem Gleitkörper 38 und der Lagerpfanne 42 eingekoppelt. Erfindungsgemäß ist es vorgesehen, daß der Schmierungsbereich 68 gegenüber dem Freiraum 46 abgedichtet ist. Der Freiraum 46 steht in fluidwirksamer Verbindung mit dem Luftspalt 33. Durch die Abdichtung des Schmierungsbereichs 68 kann eine Durchströmung des Luftspalts 33 mit Flüssigkeit gesperrt werden oder zumindest weitgehend vermieden werden.

Die Lagerpfanne 42 weist am Schmierungsbereich 68 eine Mehrzahl von Schmierungsnuten auf, durch die die Schmiermittelbenetzung verbessert wird.

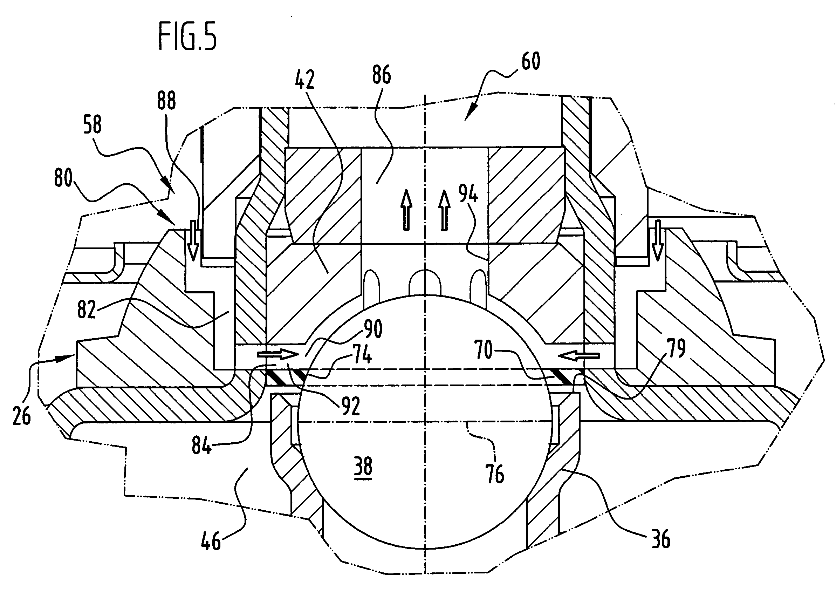

Bei dem in den Figuren 4 und 5 gezeigten Ausführungsbeispiel ist zur Abdichtung ein Dichtelement 70 vorgesehen. Ein solches Dichtelement, welches insbesondere als Dichtring ausgebildet ist, kann beispielsweise aus Teflon hergestellt sein.

Bei dem Ausführungsbeispiel gemäß Figuren 4, 5 sitzt das Dichtelement 70 an der Lagerpfanne 42. Das Dichtelement 70 weist dem Gleitkörper 38 zugewandt einen umlaufenden Rand 74 auf, mit welchem es an dem Gleitkörper 38 anliegt, um so eben für die Abdichtung zu dem Freiraum 46 hin zu sorgen.

Das Dichtelement 70 sitzt diesseits einer Äquatorialebene 76 des Gleitkörpers 38, d. h. ragt nicht über diese Äquatorialebene 76 hinaus. Dies hat den Vorteil, daß sich das Dichtelement 70 bei Veränderung der relativen Lage zwischen der Lagerpfanne 42 und dem Gleitkörper 38 selber nachstellen kann.

Es ist auch möglich, eine Lagerpfanne vorzusehen, welche über eine Äquatorialebene des Gleitkörpers 38 hinausreicht (in der Zeichnung nicht gezeigt). Das Dichtelement sitzt dann an der Lagerpfanne jenseits der Äquatorialebene, d. h. näher an einer Stirnseite 79 des Halters 36 als bei dem Ausführungsbeispiel gemäß Figuren 4, 5.

Es ist grundsätzlich auch möglich, daß das Dichtelement 70 beabstandet zu der Lagerpfanne 42 ist und dabei die Grenze zwischen dem Freiraum 46 und dem Schmierungsbereich 68 definiert.

Um den Schmierungsbereich 68 mit Schmierungsflüssigkeit zu versorgen und Schmierungsflüssigkeit durchführen zu können, ist eine Strömungsführung 80 bereitgestellt. Eine beispielhafte Ausbildung einer solchen Strömungsführung wird anhand der Figur 5 erläutert. Die Strömungsführung 80 ist an dem Rotor 26 ausgebildet, so daß zur Durchführung von Schmierungsflüssigkeit durch den Schmierungsbereich 68 der Luftspalt 33 umgangen werden kann. Die Strömungsführung 80 weist eine Mehrzahl von Strömungskanälen 82 auf. Diese umfassen mindestens einen Zuführungskanal 84, über den Schmierungsflüssigkeit in den Schmierungsbereich 68 eingekoppelt wird, und mindestens einen Abführungskanal 86, über den Schmierungsflüssigkeit aus dem Schmierungsbereich 68 abführbar ist. Dadurch wiederum läßt sich Schmierungsflüssigkeit durch den Schmierungsbereich 68 führen, um für eine Flüssigkeitsschmierung des sphärischen Lagers 34 zu sorgen.

Der mindestens eine Zuführungskanal 84 weist eine (Einkopplungs-) Mündungsöffnung 88 auf, welche mit dem Druckbereich 58 der Umwälzpumpe 10 in fluidwirksamer Verbindung steht. Es wird dann Flüssigkeit in einen solchen Zuführungskanal 84 eingekoppelt. Diese Flüssigkeit bildet Schmierungsflüssigkeit für das sphärische Lager 34.

Der mindestens eine Zuführungskanal 84 ist in der Lagerpfanne 42 gebildet und weist eine (Auskopplungs-)Mündungsöffnung 90 in den Schmierungsbereich 68 auf. Die Mündungsöffnung 90 ist dabei seitlich (bezogen auf die Drehachse 28) angeordnet, d. h. der mindestens eine Zuführungskanal 84 mündet seitlich in den Schmierungsbereich 68. Dazu kann der Zuführungskanal 84 eine Querbohrung in der Lagerpfanne 42 umfassen (bezogen auf die Drehachse 28) und/oder es kann eine Querausnehmung 92 an einer dem Dichtelement 70 zugewandten Oberfläche der Lagerpfanne 42 vorgesehen sein.

Die Querausnehmung 92 kann beispielsweise auch ringförmig ausgestaltet sein, so daß der Schmierungsbereich 68 über seinen ganzen Umfang mit Schmierungsflüssigkeit versorgbar ist.

Ein Zuführungskanal 84 kann auch eine Mehrzahl solcher Querbohrungen bzw. Querausnehmungen aufweisen bzw. mit einer Mehrzahl solcher Querausnehmungen verbunden sein.

Die Lagerpfanne 42 weist eine zentrale (bezogen auf die Drehachse 28) Schmierungsöffnung 94 auf. Über diese Schmierungsöffnung (welche den Abführungskanal 86 bildet oder Teil dieses Abführungskanals 86 ist) läßt sich Schmierungsflüssigkeit abführen. Die Schmierungsöffnung 94 steht dabei in fluidwirksamer Verbindung mit dem Saugbereich 60 der Umwälzpumpe 10.

Durch die Strömungsführung 80 läßt sich Schmierungsflüssigkeit durch den Schmierungsbereich 68 führen, ohne daß der Luftspalt 33 durchströmt werden muß. Es ist eine Abdeckung 98 (Figuren 1 und 4) zwischen dem Laufrad 50 und dem Rotor 26 vorgesehen. Diese Abdeckung 98 sitzt beispielsweise in dem ersten Gehäuse 12. Diese Abdeckung 98 ist insbesondere in der Form eines Trennblechs ausgebildet. Die Abdeckung 98 deckt den Luftspalt 33 nach oben zu dem Laufradraum 52 und insbesondere zu dem Druckbereich 58 ab. Dadurch wird der Strömungsdurchsatz von Flüssigkeit durch den Luftspalt 33 gesperrt oder zumindest stark verringert.

Die Abdeckung 98 ist so angeordnet, daß die Rotation des Rotors 26 und des Laufrads 50 nicht behindert ist. Beispielsweise ist die Abdeckung 98 mit der Trennkalotte 20 des Stators 16 verbunden und greift teilweise über den Rotor 26, um so eben den Spalt 33 abzudecken.

Bei der erfindungsgemäßen Lösung wird der Schmierungsbereich 68 mit Schmierungsflüssigkeit durch den Rotor 26 versorgt, um so eben die Durchströmung des Luftspalts 33 weitgehend zu verhindern. Es ist erlaubt, daß sich Flüssigkeit in dem Luftspalt 33 ansammeln kann. Die Dichtung (über das Dichtelement 70) muß jedoch so dicht sein, daß der Volumendurchfluß von Schmierungsflüssigkeit durch den Schmierungsbereich 68 in überwiegendem Maße unter Umgehung des Luftspalts 33 erfolgt.

Wenn Flüssigkeit durch den Luftspalt 33 strömt, dann tritt das grundsätzliche Problem auf, daß magnetische Partikel aufgrund der dort herrschenden Magnetkräfte haften bleiben. Eine solche Ansammlung von magnetischen Partikeln kann zu einer Blockierung der Beweglichkeit zwischen dem Rotor 26 und dem Stator 16 und damit zu einer Blockierung der Umwälzpumpe 10 führen. Da bei der erfindungsgemäßen Lösung der Volumendurchsatz an Flüssigkeit durch den Luftspalt 33 gesperrt oder zumindest stark verringert ist, ist damit auch die Gefahr der Ansammlung von magnetischen Partikeln stark verringert.

Weiterhin tritt bei aus dem Stand der Technik bekannten Umwälzpumpen das Problem auf, daß aufgrund einer inhärenten Friktionspumpe die Durchströmung des Luftspalts 33 vom Betriebspunkt abhängt. Es können dabei unkontrollierbare Verhältnisse auftreten. Durch die erfindungsgemäße Lösung, bei der der Luftspalt 33 bezüglich der Flüssigkeitsdurchführung umgangen ist, ist die Lagerschmierung unabhängig vom Betriebspunkt und damit von der Förderhöhe.

Bei dem Dichtelement 70 handelt es sich um eine bezogen auf die Lagerpfanne 42 getrennte Dichtung.

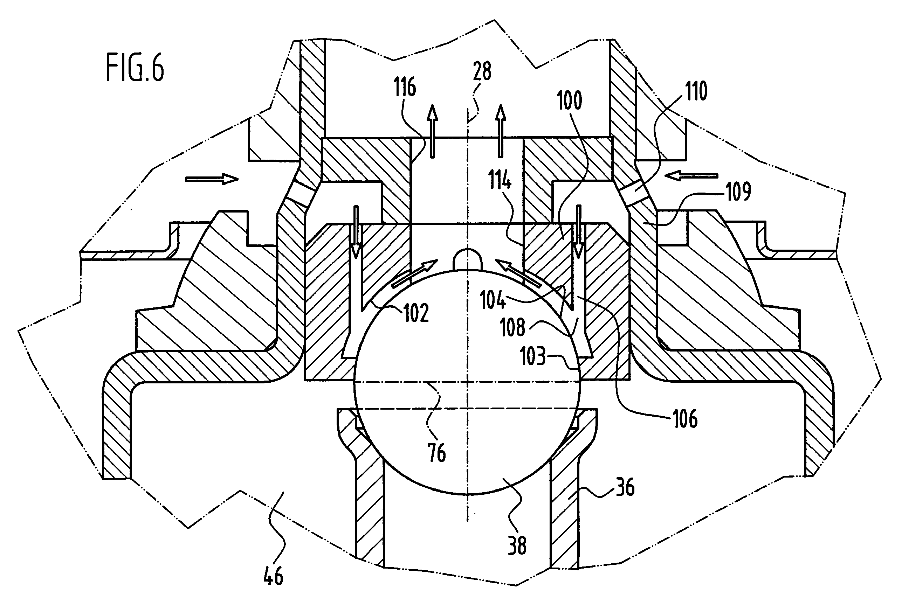

Es kann auch vorgesehen sein, daß Dichtungen des Schmierungsbereichs 68 gegenüber dem Freiraum 46 integral an einer entsprechenden Lagerpfanne 100 (Figur 6) gebildet sind. Die Lagerpfanne weist dazu eine sphärische konkave Oberfläche 102 auf, welche dem Gleitkörper 38 zugewandt ist. (Der Gleitkörper 38 und der Halter 36 sind grundsätzlich gleich ausgebildet wie oben beschrieben, so daß die gleichen Bezugszeichen verwendet werden.) An ihrem dem Freiraum 46 zugewandten Ende weist die Lagerpfanne einen umlaufenden Rand 103 auf, mit dem sie an dem Gleitkörper 38 anliegt, um so eben für eine Abdichtung eines Schmierungsbereichs 104 gegenüber dem Freiraum 46 und damit gegenüber dem Luftspalt 33 zu sorgen. Der umlaufende Rand 103 ist - im Gegensatz zu aus dem Stand der Technik bekannten Lagerpfannen - nicht unterbrochen, um eben für einen Verschluß des Schmierungsbereichs 104 gegenüber dem Freiraum 46 zu sorgen.

In den Schmierungsbereich 104 münden Strömungskanäle 106, welche in der Lagerpfanne 100 verlaufen und beispielsweise in der Form von (geradlinigen) Bohrungen in dieser gebildet sind. Es ist dabei vorzugsweise eine Mehrzahl von Strömungskanälen 106 vorgesehen, welche um einen Innenumfang der Lagerpfanne 100 verteilt um die Drehachse 28 angeordnet sind. Die Strömungskanäle 106 weisen jeweilige entsprechende Mündungsöffnungen 108 auf, mit welchen sie direkt in den Schmierungsbereich 104 münden. Die Mündungsöffnungen 108 sind dabei vorzugsweise in der Nähe der Abdichtung 103 (dem umlaufenden Rand) des Strömungsbereichs 104 angeordnet, so daß der Strömungsbereich 104 großflächig durchströmbar ist.

Die Strömungskanäle 106 sind wiederum mit dem Druckbereich 58 der Umwälzpumpe 10 verbunden, so daß Schmierungsflüssigkeit aus dem Druckbereich 58 in den Schmierungsbereich 104 einkoppelbar ist. Bei dem gezeigten Ausführungsbeispiel erstrecken sich die Strömungskanäle 106 parallel zur Drehachse 28 durch die Lagerpfanne 100 und münden dann über die Mündungsöffnungen 108 in den Schmierungsbereich 104. In einer Wand 109 des entsprechenden Rotors ist eine Öffnung 110 gebildet, welche wiederum mit dem oder den Strömungskanälen 106 verbunden ist. Die Öffnung 110 mündet in den Druckbereich 58 der Umwälzpumpe.

Zur Abführung von Schmierungsflüssigkeit ist in der Lagerpfanne 100 eine zentrale Schmierungsöffnung 114 gebildet, welche über einen Kanal 116 in den Saugbereich 60 der Umwälzpumpe mündet.

Bei dem Ausführungsbeispiel gemäß Figur 6 liegt ein in den Freiraum 46 weisendes Ende der Lagerpfanne 100 diesseits der Äquatorialebene 76 des Gleitkörpers 38, d. h. oberhalb einer solchen Äquatorialebene.

Über die Strömungskanäle 106 und die Schmierungsöffnung 114 läßt sich Schmierungsflüssigkeit durch den Schmierungsbereich 104 unter Umgehung des Luftspalts 33 transportieren.

Dadurch ergeben sich die bereits oben geschilderten Vorteile.

Bei einem Ausführungsbeispiel ist, wie in Figur 4 schematisch gezeigt, mindestens eine Öffnung 120 zwischen dem Freiraum 46 und einem Trennraum 122 ("Trennblechraum") gebildet. Der Trennraum 122 ist unterhalb des Laufradraums 52 dem Elektromotor 14 zugewandt angeordnet. Der Trennraum 122 und der Laufradraum 52 sind durch die Abdeckung 98 (bei der es sich insbesondere um ein Trennblech handelt) getrennt. Die Öffnung 120 mündet dabei in den Trennraum 122.

Durch die Öffnung 120 kann Flüssigkeit aus dem Bereich 122 in den Freiraum 46 strömen. Es läßt sich dadurch ein näherungsweise geschlossener Flüssigkeitskreislauf durch den Raum 46, den Spalt 33 und den Raum 122 ausbilden. Durch die Friktionspumpe läßt sich über diesen Kreislauf eben Flüssigkeit durch den Luftspalt 33 transportieren, um so den Rotor 26 und/oder den Stator 16 zu kühlen. Da dieser Kreislauf näherungsweise geschlossen ist, tritt das Problem der Ansammlung magnetischer Partikel nicht auf.

Vor Inbetriebnahme der erfindungsgemäßen Umwälzpumpe wird der Freiraum 46 und der Bereich 122 mit Flüssigkeit aufgefüllt, so daß sich bei der Friktionspumpe eben der geschlossene Kreislauf mit Kühlwirkung ausbilden kann.

## Patentansprüche

1. Umwälzpumpe mit einem Elektromotor (14), welcher einen Rotor (26) und einen Stator (16) umfaßt, wobei der Rotor (26) an einem sphärischen Lager (34) gelagert ist, welches einen Gleitkörper (38) mit konvexer sphärischer Oberfläche (40) und eine Lagerpfanne (42; 100) mit konkaver sphärischer Oberfläche (44; 102) umfaßt und welches flüssigkeitsgeschmiert ist, und wobei ein Spalt (33) zwischen dem Rotor (26) und Stator (16) gebildet ist, wobei eine Strömungsführung (80) zur Durchführung von Schmierungsflüssigkeit durch einen Schmierungsbereich (68; 104) zwischen dem Gleitkörper (38) und der Lagerpfanne (42; 100) getrennt von dem Spalt (33) ist, und wobei sich an den Schmierungsbereich (68; 104) von der Lagerpfanne (42; 100) weg ein Raum (46) anschließt, **dadurch gekennzeichnet, daß** der Schmierungsbereich (68; 104) durch eine Dichtung (70; 103) gegenüber dem Raum (46) abgedichtet ist und daß die Dichtung (70; 103) an dem Gleitkörper (38) anliegt.

2. Umwälzpumpe nach Anspruch 1, **dadurch gekennzeichnet, daß** die Strömungsführung (80) den Spalt (33) zwischen Stator (16) und Rotor (26) umgeht.

3. Umwälzpumpe nach Anspruch 1 oder 2, **dadurch gekennzeichnet, daß** die Strömungsführung (80) an dem Spalt (33) zwischen Stator (16) und Rotor (26) vorbei geführt ist.

4. Umwälzpumpe nach einem der vorangehenden Ansprüche, **dadurch gekennzeichnet, daß** die Strömungsführung (80) so ausgebildet ist, daß Schmierungsflüssigkeit dem Schmierungsbereich (68; 104) durch den Rotor (26) hindurch zuführbar ist und über den Rotor (26) abführbar ist.

5. Umwälzpumpe nach einem der vorangehenden Ansprüche, **dadurch gekennzeichnet, daß** die Strömungsführung (80) in dem Rotor (26) ausgebildet ist.

6. Umwälzpumpe nach einem der vorangehenden Ansprüche, **dadurch gekennzeichnet, daß** die Strömungsführung (80) einen oder mehrere Strömungskanäle (82, 94; 106, 114) umfaßt, welche in dem Rotor (26) angeordnet sind.

7. Umwälzpumpe nach einem der vorangehenden Ansprüche, **dadurch gekennzeichnet, daß** die Strömungsführung (80) einen oder mehrere Zuführungskanäle (84; 106) für Schmierungsflüssigkeit in den Schmierungsbereich (68; 104) umfaßt, welche in dem Rotor (26) gebildet sind.

8. Umwälzpumpe nach einem der vorangehenden Ansprüche, **dadurch gekennzeichnet, daß** der Schmierungsbereich (68; 104) endseitig zwischen dem Gleitkörper (38) und der Lagerpfanne (42; 100) geschlossen ist.

9. Umwälzpumpe nach einem der vorangehenden Ansprüche, **dadurch gekennzeichnet, daß** der Schmierungsbereich (68; 104) zu einem Halter (36) für den Gleitkörper (38) hin geschlossen ist.

10. Umwälzpumpe nach einem der vorangehenden Ansprüche, **dadurch gekennzeichnet, daß** in dem Raum (46) der Gleitkörper (38) teilweise sitzt.

11. Umwälzpumpe nach einem der vorangehenden Ansprüche, **dadurch gekennzeichnet, daß** in dem Raum (46) zumindest teilweise ein Halter (36) für den Gleitkörper (38) angeordnet ist.

12. Umwälzpumpe nach einem der vorangehenden Ansprüche, **dadurch gekennzeichnet, daß** der Raum (46) in fluidwirksamer Verbindung mit dem Spalt (33) zwischen Stator (16) und Rotor (26) steht.

13. Umwälzpumpe nach einem der vorangehenden Ansprüche, **dadurch gekennzeichnet, daß** die Dichtung (70; 103) dem Gleitkörper (38) zugewandt einen umlaufenden Rand (74) aufweist.

14. Umwälzpumpe nach einem der vorangehenden Ansprüche, **dadurch gekennzeichnet, daß** die Dichtung (103) integral mit der Lagerpfanne (100) gebildet ist.

15. Umwälzpumpe nach einem der vorangehenden Ansprüche, **dadurch gekennzeichnet, daß** mindestens ein Dichtelement (70) zur Abdichtung des Schmierungsbereichs (68) vorgesehen ist.

16. Umwälzpumpe nach Anspruch 15, **dadurch gekennzeichnet, daß** das Dichtelement (70) an der Lagerpfanne (42) sitzt.

17. Umwälzpumpe nach Anspruch 15 oder 16, **dadurch gekennzeichnet, daß** das Dichtelement (70) in Form eines Dichtrings vorliegt.

18. Umwälzpumpe nach einem der vorangehenden Ansprüche, **dadurch gekennzeichnet, daß** die Dichtung (70) diesseits einer Äquatorialebene (76) des Gleitkörpers (38) angeordnet ist.

19. Umwälzpumpe nach einem der vorangehenden Ansprüche, **dadurch gekennzeichnet, daß** die Dichtung jenseits einer Äquatorialebene (76) des Gleitkörpers (38) angeordnet ist.

20. Umwälzpumpe nach einem der vorangehenden Ansprüche, **dadurch gekennzeichnet, daß** ein oder mehrere Strömungskanäle (82; 106) in den Schmierungsbereich (68; 104) münden.

21. Umwälzpumpe nach Anspruch 20, **dadurch gekennzeichnet, daß** mindestens ein Strömungskanal (82; 106) seitlich in den Schmierungsbereich (68; 104) mündet.

22. Umwälzpumpe nach Anspruch 20 oder 21, **dadurch gekennzeichnet, daß** eine Mündungsöffnung (90) des mindestens einen Strömungskanals (84), mit welcher dieser in den Schmierungsbereich (68) mündet, quer zu einer Drehachse (28) des Rotors (26) ausgerichtet ist.

23. Umwälzpumpe nach einem der Ansprüche 20 bis 22, **dadurch gekennzeichnet, daß** der mindestens eine Strömungskanal (82; 106) in der Lagerpfanne (100) und/oder an der Lagerpfanne (100) angeordnet ist.

24. Umwälzpumpe nach einem der Ansprüche 20 bis 23, **dadurch gekennzeichnet, daß** eine Mündungsöffnung (88) des mindestens einen Strömungskanals (82), über den Schmierungsflüssigkeit in den Strömungskanal (82) einströmbar ist, mit einem Druckbereich (58) der Umwälzpumpe in fluidwirksamer Verbindung steht.

25. Umwälzpumpe nach einem der vorangehenden Ansprüche, **dadurch gekennzeichnet, daß** in der Lagerpfanne (42; 78; 100) eine Schmierungsöffnung (94; 114) gebildet ist.

26. Umwälzpumpe nach Anspruch 25, **dadurch gekennzeichnet, daß** die Schmierungsöffnung (94; 114) zu einer Drehachse (28) des Rotors (26) ausgerichtet ist.

27. Umwälzpumpe nach Anspruch 25 oder 26, **dadurch gekennzeichnet, daß** die Schmierungsöffnung (94; 114) mit einem Saugbereich (60) der Umwälzpumpe in fluidwirksamer Verbindung steht.

28. Umwälzpumpe nach einem der vorangehenden Ansprüche, **dadurch gekennzeichnet, daß** eine Abdeckung (98) für den Spalt (33) zwischen Stator (16) und Rotor (26) vorgesehen ist.

29. Umwälzpumpe nach einem der vorangehenden Ansprüche, **dadurch gekennzeichnet, daß** eine Abdeckung (98) zwischen einem Laufrad (50) und dem Elektromotor (14) vorgesehen ist.

30. Umwälzpumpe nach Anspruch 28 oder 29, **dadurch gekennzeichnet, daß** zwischen der Abdeckung (98) und dem Elektromotor (14) ein Trennraum (122) gebildet ist.

31. Umwälzpumpe nach einem der vorangehenden Ansprüche, **dadurch gekennzeichnet, daß** die Strömungsführung (80) mit einem Druckbereich (58) der Umwälzpumpe in fluidwirksamer Verbindung steht und mit einem Saugbereich (60) in fluidwirksamer Verbindung steht, wobei Schmierungsflüssigkeit über mindestens einen Strömungskanal (82; 106) durch den Schmierungsbereich (68; 104) strömen kann.

32. Umwälzpumpe nach einem der vorangehenden Ansprüche, **dadurch gekennzeichnet, daß** ein Lagerbereich des sphärischen Lagers (34) zwischen dem Elektromotor (14) und einem Laufrad (50) liegt.

33. Umwälzpumpe nach einem der vorangehenden Ansprüche, **dadurch gekennzeichnet, daß** eine Öffnung zwischen einem Raum (46), in welchem ein Halter (36) für den Gleitkörper (38) mindestens teilweise angeordnet ist, und einem Trennraum (122) vorgesehen ist, wobei der Trennraum (122) unterhalb eines Laufradraums (52) liegt.

34. Verfahren zur Flüssigkeitsschmierung eines sphärischen Lagers mit einem Gleitkörper und einer Lagerpfanne in einem Elektromotor, bei dem ein Strömungsweg für Schmierungsflüssigkeit in einen Schmierungsbereich zwischen Gleitkörper und Lagerpfanne freigegeben ist oder wird und ein Strömungsweg für Schmierungsflüssigkeit durch einen Luftspalt des Elektromotors durch eine Dichtung, welche an dem Gleitkörper anliegt, gesperrt ist oder wird.

35. Verfahren nach Anspruch 34, **dadurch gekennzeichnet, daß** ein Strömungsweg durch einen Rotor des Elektromotors freigegeben ist oder wird und ein Strömungsweg zwischen dem Rotor und einem Stator gesperrt ist oder wird.

## Claims

1. Circulating pump with an electric motor (14) which comprises a rotor (26) and a stator (16), wherein the rotor (26) is mounted on a spherical bearing (34) which comprises a slide body (38) with a convex spherical surface (40) and a bearing cup (42; 100) with a concave spherical surface (44; 102) and which is liquid-lubricated and wherein a gap (33) is formed between the rotor (26) and stator (16),
wherein a flow guide (80) is separated from the gap (33) to carry lubricating liquid through a lubrication region (68; 104) between the slide body (38) and the bearing cup (42; 100) and wherein a chamber (46) adjoins the lubrication region (68; 104) away from the bearing cup (42; 100), **characterised in that** the lubrication region (68; 104) is sealed by a seal (70; 103) with respect to the chamber (46) and **in that** the seal (70; 103) rests against the slide body (38).

2. Circulating pump according to Claim 1, **characterised in that** the flow guide (80) bypasses the gap (33) between stator (16) and rotor (26).

3. Circulating pump according to Claim 1 or 2, **characterised in that** the flow guide (80) is led past the gap (33) between stator (16) and rotor (26).

4. Circulating pump according to any one of the preceding claims, **characterised in that** the flow guide (80) is configured such that lubricating liquid can be supplied to the lubrication region (68; 104) through the rotor (26) and can be discharged via the rotor (26).

5. Circulating pump according to any one of the preceding claims, **characterised in that** the flow guide (80) is configured in the rotor (26).

6. Circulating pump according to any one of the preceding claims, **characterised in that** the flow guide (80) comprises one or a plurality of flow channels (82, 94; 106, 114) which are arranged in the rotor (26).

7. Circulating pump according to any one of the preceding claims, **characterised in that** the flow guide (80) comprises one or a plurality of supply channels (84; 106) for lubricating liquid into the lubrication region (68; 104) which are formed in the rotor (26).

8. Circulating pump according to any one of the preceding claims, **characterised in that** the lubrication region (68; 104) is sealed at the end between the slide body (38) and the bearing cup (42; 100).

9. Circulating pump according to any one of the preceding claims, **characterised in that** the lubrication region (68; 104) is sealed towards a holder (36) for the slide body (38).

10. Circulating pump according to any one of the preceding claims, **characterised in that** the slide body (38) sits partially in the chamber (46).

11. Circulating pump according to any one of the preceding claims, **characterised in that** a holder (36) for the slide body (38) is arranged at least partially in the chamber (46).

12. Circulating pump according to any one of the preceding claims, **characterised in that** the chamber (46) is in fluid-effective connection with the gap (33) between stator (16) and rotor (26).

13. Circulating pump according to any one of the preceding claims, **characterised in that** the seal (70; 103) comprises a circumferential edge (74) facing the slide body (38).

14. Circulating pump according to any one of the preceding claims, **characterised in that** the seal (103) is formed integrally with the bearing cup (100).

15. Circulating pump according to any one of the preceding claims, **characterised in that** at least one seal element (70) is provided for sealing the lubrication region (68).

16. Circulating pump according to Claim 15, **characterised in that** the seal element (70) sits on the bearing cup (42).

17. Circulating pump according to Claim 15 or 16, **characterised in that** the seal element (70) is present in the form of a seal ring.

18. Circulating pump according to any one of the preceding claims, **characterised in that** the seal (70) is arranged on this side of an equatorial plane (76) of the slide body (38).

19. Circulating pump according to any one of the preceding claims, **characterised in that** the seal is arranged on the other side of an equatorial plane (76) of the slide body (38).

20. Circulating pump according to any one of the preceding claims, **characterised in that** one or a plurality of flow channels (82; 106) lead into the lubrication region (68; 104).

21. Circulating pump according to Claim 20, **characterised in that** at least one flow channel (82; 106) leads laterally into the lubrication region (68; 104).

22. Circulating pump according to Claim 20 or 21, **characterised in that** a discharge opening (90) of the at least one flow channel (84), by means of which said flow channel leads into the lubrication region (68), is aligned transverse to a rotation axis (28) of the rotor (26).

23. Circulating pump according to any one of Claims 20 to 22, **characterised in that** the at least one flow channel (82; 106) is arranged in the bearing cup (100) and/or on the bearing cup (100).

24. Circulating pump according to any one of Claims 20 to 23, **characterised in that** a discharge opening (88) of the at least one flow channel (82), via which lubricating liquid can flow into the flow channel (82), is in fluid-effective connection with a pressure region (58) of the circulating pump.

25. Circulating pump according to any one of the preceding claims, **characterised in that** a lubrication opening (94; 114) is formed in the bearing cup (42; 78; 100).

26. Circulating pump according to Claim 25, **characterised in that** the lubrication opening (94; 114) is aligned to a rotation axis (28) of the rotor (26).

27. Circulating pump according to Claim 25 or 26, **characterised in that** the lubrication opening (94; 114) is in fluid-effective connection with a suction region (60) of the circulating pump.

28. Circulating pump according to any one of the preceding claims, **characterised in that** a cover (98) is provided for the gap (33) between stator (16) and rotor (26).

29. Circulating pump according to any one of the preceding claims, **characterised in that** a cover (98) is provided between an impeller (50) and the electric motor (14).

30. Circulating pump according to Claim 28 or 29, **characterised in that** a separation chamber (122) is formed between the cover (98) and the electric motor (14).

31. Circulating pump according to any one of the preceding claims, **characterised in that** the flow guide (80) is in fluid-effective connection with a pressure region (58) of the circulating pump and is in fluid-effective connection with a suction region (60), wherein lubricating liquid can flow via at least one flow channel (82; 106) through the lubrication region (68; 104).

32. Circulating pump according to any one of the preceding claims, **characterised in that** a storage region of the spherical bearing (34) is between the electric motor (14) and an impeller (50).

33. Circulating pump according to any one of the preceding claims, **characterised in that** an opening is provided between a chamber (46), in which a holder (36) for the slide body (38) is at least partially arranged, and a separation chamber (122), wherein the separation chamber (122) is below an impeller chamber (52).

34. Method for the liquid lubrication of a spherical bearing with a slide body and a bearing cup in an electric motor, in the case of which a flow path for lubricating liquid in a lubrication region between slide body and bearing cup is or becomes enabled and a flow path for lubricating liquid through an air gap of the electric motor is or becomes disabled by means of a seal which rests on the slide body.

35. Method according to Claim 34, **characterised in that** a flow path through a rotor of the electric motor is or becomes enabled and a flow path between the rotor and a stator is or becomes disabled.

## Revendications

1. Pompe de circulation équipée d'un moteur électrique (14), comprenant à son tour un rotor (26) et un stator (16), étant entendu que le rotor (26) repose sur un roulement sphérique (34), lequel contient un corps de glissement (38) de surface sphérique convexe (40) et un moyeu (42 ; 100) de surface sphérique concave (44 ; 102) et lequel roulement est en outre lubrifié par un liquide, et étant entendu qu'une fente (33) est aménagée entre le rotor (26) et le stator (16),
étant entendu qu'une conduction de flux (80), présente pour assurer le passage d'un liquide de lubrification au travers d'un espace de lubrification (68 ; 104) situé entre le corps de glissement (38) et le moyeu (42 ; 100), reste séparée de la fente (33), et étant entendu qu'un espace (46) est présent, partant de la région de lubrification (68 ; 104) et se poursuivant en s'écartant du moyeu (42 ; 100), **caractérisée en ce que** la zone de lubrification (68 ; 104) est rendue étanche à l'égard de l'espace (46) par un joint (70 ; 103), et **en ce que** le joint (70 ;103) est en contact avec le corps de glissement (38).

2. Pompe de circulation selon la revendication 1, **caractérisée en ce que** la conduction de flux (80) élude la fente (33) entre stator (16) et rotor (26).

3. Pompe de circulation selon la revendication 1 ou 2, **caractérisée en ce que** la conduction de flux passe devant la fente (33) entre stator (16) et rotor (26).

4. Pompe de circulation selon l'une quelconque des revendications précédentes, **caractérisée en ce que** la conduction de flux est réalisée de manière telle que le liquide de lubrification (80) est susceptible d'être introduit dans la zone de lubrification (68 ; 104) au travers du rotor (26) et d'être évacuée au-dessus du rotor (26).

5. Pompe de circulation selon l'une quelconque des revendications précédentes, **caractérisée en ce que** la conduction de flux (80) est réalisée dans le rotor (26).

6. Pompe de circulation selon l'une quelconque des revendications précédentes, **caractérisée en ce que** la conduction de flux (80) comporte un ou plusieurs canaux d'écoulement (82, 94 ; 106, 114) disposés face au rotor (26).

7. Pompe de circulation selon l'une quelconque des revendications précédentes, **caractérisée en ce que** la conduction de flux (80) comporte un ou plusieurs canaux d'entrée (84 ; 106) de liquide de lubrification dans la zone de lubrification (68 ; 114), lesquels sont réalisés dans le rotor (26).

8. Pompe de circulation selon l'une quelconque des revendications précédentes, **caractérisée en ce que** la zone de lubrification (68 ; 104) est fermée en son extrémité située entre le corps de glissement (38) et le moyeu (42 ; 100).

9. Pompe de circulation selon l'une quelconque des revendications précédentes, **caractérisée en ce que** la zone de lubrification (68 ; 104) se trouve fermée dans la direction d'un support (36) du corps de glissement (38).

10. Pompe de circulation selon l'une quelconque des revendications précédentes, **caractérisée en ce que** le corps de glissement (38) a son siège en partie dans l'espace (46).

11. Pompe de circulation selon l'une quelconque des revendications précédentes, **caractérisée en ce que** dans l'espace (46), est disposé, à tout le moins partiellement, un support (36) du corps de glissement (38).

12. Pompe de circulation selon l'une quelconque des revendications précédentes, **caractérisée en ce que** l'espace (46) se trouve en liaison fluide avec la fente (33) située entre le stator (16) et le rotor (26).

13. Pompe de circulation selon l'une quelconque des revendications précédentes, **caractérisée en ce que** le joint (70 ; 103) faisant face au corps de glissement (38) possède un bord (74) qui entoure sa circonférence.

14. Pompe de circulation selon l'une quelconque des revendications précédentes, **caractérisée en ce que** le joint (103) est réalisé comme partie intégrante du moyeu (100).

15. Pompe de circulation selon l'une quelconque des revendications précédentes, **caractérisée en ce qu'**il est prévu au moins un élément de joint (70) pour assurer l'étanchéité de la zone de lubrification (68).

16. Pompe de circulation selon la revendication 15, **caractérisée en ce que** l'élément de joint (70) se trouve sur le moyeu (42).

17. Pompe de circulation selon la revendication 15 ou 16, **caractérisée en ce que** l'élément de joint (70) se présente sous la forme d'un o-ring.

18. Pompe de circulation selon l'une quelconque des revendications 1 à 5, **caractérisée en ce que** le joint (70) est disposé en-deçà d'un plan équatorial (76) du corps de glissement (38).

19. Pompe de circulation selon l'une quelconque des revendications précédentes, **caractérisée en ce que** le joint (70) est disposé au-delà d'un plan équatorial (76) du corps de glissement (38).

20. Pompe de circulation selon l'une quelconque des revendications précédentes, **caractérisée en ce qu'**un ou plusieurs canaux de flux (82 ; 106) débouchent dans la zone de lubrification (68 ; 104).

21. Pompe de circulation selon la revendication 20, **caractérisée en ce qu'**au moins un canal de flux (82 ; 106) débouche latéralement dans la zone de lubrification (68 ; 104).

22. Pompe de circulation selon la revendication 20 ou 21, **caractérisée en ce qu'**un orifice (90) d'au moins un canal de lubrification (84) par lequel ce canal débouche dans la zone de lubrification (68), est dirigé perpendiculairement à un axe de rotation (28) du rotor (26).

23. Pompe de circulation selon l'une quelconque des revendications 20 à 22, **caractérisée en ce que** le canal de flux (82 ; 106), au nombre d'au moins un, est disposé dans le moyeu (100) et/ou sur le moyeu (100).

24. Pompe de circulation selon l'une quelconque des revendications 20 à 23, **caractérisée en ce qu'**un orifice (88) d'au moins un canal de flux (82), par lequel du liquide de lubrification est susceptible de s'écouler dans un canal de flux (82), se trouve en liaison fluide avec une zone de refoulement (58) de la pompe de circulation.

25. Pompe de circulation selon l'une quelconque des revendications précédentes, **caractérisée en ce qu'**une ouverture de lubrification (94 ; 114) est réalisée dans le moyeu (42 ; 78 ; 100).

26. Pompe de circulation selon la revendication 25, **caractérisée en ce que** l'ouverture de lubrification (94 ; 114) est dirigée selon un axe de rotation (28) du rotor (26).

27. Pompe de circulation selon la revendication 25 ou 26, **caractérisée en ce que** l'ouverture de lubrification (94 ; 114) est en liaison fluide avec une zone d'aspiration (60) de la pompe de circulation.

28. Pompe de circulation selon l'une quelconque des revendications précédentes, **caractérisée en ce qu'**une couverture (98) est prévue pour la fente (33) située entre le stator (16) et le rotor (26).

29. Pompe de circulation selon l'une quelconque des revendications précédentes, **caractérisée en ce qu'**une couverture (98) est prévue pour la fente située entre une roue (50) et le moteur électrique (14).

30. Pompe de circulation selon la revendication 28 ou 29, **caractérisée en ce qu'**un espace de séparation (122) est réalisé entre la couverture (98) et le moteur électrique (14).

31. Pompe de circulation selon l'une quelconque des revendications précédentes, **caractérisée en ce que** la conduction de flux (80) est en liaison fluide avec une zone de refoulement (58) de la pompe de circulation et est en liaison fluide avec une zone d'aspiration (60), étant entendu que le liquide de lubrification peut s'écouler au travers de la zone de lubrification (68 ; 104) par au moins un canal de flux (82 ; 106).

32. Pompe de circulation selon l'une quelconque des revendications précédentes, **caractérisée en ce qu'**une zone de roulement du roulement sphérique (34) est située entre le moteur électrique (14) et une roue (50).

33. Pompe de circulation selon l'une quelconque des revendications précédentes, **caractérisée en ce qu'**une ouverture est prévue entre un espace (46), dans lequel est disposé, au moins partiellement, un support (36) pour le corps de glissement (38), et un espace de séparation (122), étant entendu que l'espace de séparation (122) se situe sous un espace de roue (52).

34. Procédé pour la lubrification liquide d'un roulement sphérique avec un corps de glissement et un moyeu, dans un moteur électrique, dans lequel est libéré, ou le sera, un chemin d'écoulement de liquide de lubrification dans une zone de lubrification située entre corps de glissement et moyeu, et est bloqué, ou le sera, un chemin d'écoulement de liquide de lubrification passant par un espace vide du moteur électrique, grâce à un joint disposé sur le corps de glissement.

35. Procédé selon la revendication 34, **caractérisé en ce qu'**est libéré, ou le sera, un chemin d'écoulement passant par un rotor de moteur électrique, et est bloqué, ou le sera, un chemin d'écoulement entre le rotor et un stator.
